# EUROPEAN PATENT APPLICATION

(11) **EP 4 364 555 A1**
(43) Date of publication of application: **08.05.2024**
(21) Application number: 23208014.3
(22) Date of filing: 06.11.2023
(51) Int. Cl.: A01G 3/053, A01G 3/08, B23Q 13/00, B27B 17/00, B27B 17/12

(54) **CASE WITH LOCKING MEANS**

(30) Priority: 07.11.2022 IT 202200022929
(71) Applicant: Stiga S.p.A. in breve anche St. S.p.A., 31033 Castelfranco Veneto (TV) (IT)
(72) Inventor: FIOR, Roberto, 31033 Castelfranco Veneto (TV) (IT)
(74) Representative: PGA S.p.A.

(57) **Abstract**

The invention relates to a case (9) configured to be applied, for the purpose of containment and/or protection, to a blade (8) of a chainsaw (7), the blade (8) comprising a plurality of teeth composing a cutting profile. The case (9) delimits a housing volume (28) of the blade (8) therein, the housing volume (28) departing from an insertion opening (11) and extending along a longitudinal axis (V) coinciding with the main extension direction of the blade (8) when the blade (8) is arranged in the housing volume (28). According to the invention, the case (9) is provided with locking means configured to establish, when the blade (8) is arranged in the housing volume (28), a position maintenance condition of the case (9) with respect to the blade (8), in the position maintenance condition a relative movement of the case (9) with respect to the blade (8) being inhibited along the longitudinal axis (V). In order to establish position maintenance condition of the case (9), the locking means comprise an engagement element (4) configured to cooperate with a tooth (5) of the blade (8). In the position maintenance condition of the case (9), a portion of the engagement element (4) acts as an effective portion (77), being arranged inside an interposition zone between the tooth (5) of the blade (8) and the insertion opening (11).

## Description

### Field of the invention

The present invention relates to a case. The case according to the present invention is configured to be applied to a blade of a cutting and/or pruning tool, mainly having containment and/or protection purposes of such blade. The case according to the present invention is in particular configured to be applied to the blade of a chainsaw, such blade comprising a plurality of teeth defining the cutting profile.

### Background of the invention

The chainsaw is a commonly used tool for executing cutting operations. In the gardening sector, the chainsaw is typically used for operations such as pruning branches, cutting trunks and felling trees.

According to the most common configuration to date, the chainsaw includes a blade for cutting, which in turn comprises a bar and a chain, a groove being made along the perimeter of the bar and housing the chain. The links of the chain are provided with a plurality of teeth, which together form the cutting profile of the blade. The chainsaw also typically includes a motor unit and a gripping system. The motor unit comprises an endothermic motor powered by fuel or an electric motor with battery supply and has the function of determining (through a suitable transmission system) the sliding of the chain along the groove of the bar, thus allowing the chainsaw to carry out the cutting operations. The gripping system instead comprises one or more handles which allow the operator to advantageously grasp the chainsaw according to different inclinations, in particular keeping the blade substantially horizontal or keeping the blade substantially vertical, depending on the cutting operation which must be executed.

For the purposes of the correct operation of the chainsaw, it is necessary to include a suitable lubrication of the blade, so as to minimize the friction between the bar and the chain. In fact, in the absence of lubrication, the sliding of the chain along the groove of the bar would cause significant phenomena of wear and overheating, which would lead to a very early deterioration of the blade.

In order to adequately lubricate the blade, the chainsaw is typically provided with an oil supply system, which comprises a pump (typically a piston pump driven by the same motor unit included for the sliding of the chain) which, through one or more outlet holes on the bar, feeds the blade with oil at the groove in which the chain is housed.

The lubricating and/or protective oil, if on the one hand is necessary precisely to prevent phenomena of wear and/or overheating of the chainsaw blade, on the other hand has obvious drawbacks regarding the disposal thereof. In fact, a significant part of the oil is released by the blade, thus causing dirt and pollution.

The release of the oil from the blade can occur not only during the operation of the chainsaw, but also during the storage thereof. During storage, the chainsaw can be stored in a vertical orientation and with the blade arranged at the bottom, in particular engaging one of the handles of the gripping system to a support hook. The vertical orientation assumed by the blade during storage in fact facilitates the release of oil from the blade and the fall to the ground by gravity.

Traditionally, a containment and/or protective case is applied to the chainsaw for the purposes of the storage thereof, the blade of the chainsaw being (at least in the exposed part) housed in the case. When the chainsaw is stored in a vertical orientation and with the blade arranged at the bottom, the oil released by the blade tends to accumulate inside the case, with consequent fouling of the inside of the case, the disposal of the oil being particularly problematic.

To this criticality is added, with regard to storage, that the application of the case to the chainsaw can be executed by the operator incorrectly, so that the case can be separated from the blade when the chainsaw is stored in a vertical orientation and with the blade arranged at the bottom.

CN213343727U discloses a case for the blade of a chainsaw, formed by two half-shells dividing the case in the direction of the length and comprising a hinge connecting the two half-shells, so as to make the case foldable.

CN213226692U discloses a case for the blade of a chainsaw, to the distal end of which a removable cover is applied, which is connected to the body of the case by means of a pair of bolts.

CN213226044U discloses a case for the blade of a chainsaw, comprising a pair of locking devices aimed at fixing the case to the blade during storage of the chainsaw.

CN207564624U discloses a case for the blade of a chainsaw, consisting of a plurality of elements in telescopic connection with each other.

### Objectives of the Invention

The present invention has the objective of providing a case for the blade of a chainsaw which allows to overcome the drawbacks encountered in relation to the state of the art described above.

Furthermore, the present invention has the objective of providing a case for the blade of a chainsaw which allows to collect and dispose of the lubricating and/or protective oil released by the blade during the storage steps and/or during the transport steps of the chainsaw.

Furthermore, the present invention has the objective of providing a case for the blade of a chainsaw which allows to reduce the environmental impact of the chainsaw during the storage steps and/or during the transport steps of the chainsaw.

Furthermore, the present invention has the objective of providing a case for the blade of a chainsaw which allows a correct, stable and safe application to the blade during the storage steps and/or during the transport steps of the chainsaw.

Furthermore, the present invention has the objective of providing a case for the blade of a chainsaw which is inexpensive and easy to make and which is ergonomic and easy to use.

Furthermore, the present invention has the objective of providing a case for the blade of a chainsaw which exploits the advantages of the multi-part configuration referred to for example in CN213343727U and which allows additional advantages to be obtained.

Furthermore, the present invention has the objective of providing a method which allows, at the end of a storage or transport step of a chainsaw, to dispose of the lubricating and/or protective oil released by the blade, thus preventing such oil from causing fouling or pollution phenomena.

### Aspects of the invention

The above objectives are achieved, together with further advantageous effects, by the present invention as defined by the appended claims and/or by the following aspects.

A 1st aspect of the present invention relates to a case (9) configured to be applied, in particular for the purposes of containment and/or protection, to a blade (8) of a tool, in particular of a cutting and/or pruning tool, more in particular of a chainsaw (7),
in which said case (9) delimits a housing volume (28) of said blade (8) therein, in particular in which said housing volume (28) extends along a longitudinal axis (V) in particular coinciding with the main extension direction of said blade (8) when said blade (8) is arranged in said housing volume (28),
in which said case (9) further delimits at least one liquid collection volume (29) therein, in particular lubricating and/or protective oil, possibly released by said blade (8), in particular during a storage or transport step of said tool, said at least one collection volume (29) being in communication with said housing volume (28).

A 2nd aspect of the present invention, depending on the 1st aspect, relates to a case (9), in which said collection volume (29) has a capacity comprised between 0.01 litres and 1 litre, preferably a capacity comprised between 0.1 litres and 0.5 litres, more preferably a capacity comprised between 0.2 litres and 0.3 litres.

A 3rd aspect of the present invention, depending on the 1st aspect or the 2nd aspect, relates to a case (9), in which said housing volume (28) has a roughly symmetrical shape with respect to said longitudinal axis (V) and in which said at least one collection volume (29) has an asymmetrical shape with respect to said longitudinal axis (V).

A 4th aspect of the present invention, depending on the 3rd aspect, relates to a case (9), in which said at least one collection volume (29) extends starting from an end portion of said housing volume (28) and moving away from said longitudinal axis (V).

A 5th aspect of the present invention, depending on the 3rd aspect or the 4th aspect, relates to a case (9), in which said at least one collection volume (29) is at least partially delimited by a wall of said case (9) shaped so as to define a convex loop (25).

A 6th aspect of the present invention, depending on the 5th aspect, relates to a case (9), in which said convex loop (25) is roughly semicircular in shape or roughly trapezoidal in shape.

A 7th aspect of the present invention, depending on any one of the aspects from the 3rd aspect to the 6th aspect, relates to a case (9), in which at least one main portion of said housing volume (28) having, transversely to said longitudinal axis (V), a roughly constant width, in which the distance between said longitudinal axis (V) and the point of said main portion of said housing volume (28) farthest from said longitudinal axis (V) is less than the distance between said longitudinal axis (V) and the point of said collection volume (29) farthest from said longitudinal axis (V).

An 8th aspect of the present invention, depending on the 7th aspect, relates to a case (9), in which the distance between said longitudinal axis (V) and the point of said main portion of said housing volume (28) farthest from said longitudinal axis (V) is less than the distance between said longitudinal axis (V) and the geometric centre of gravity of said collection volume (29).

A 9th aspect of the present invention, depending on any one of the aspects from the 1st aspect to the 8th aspect, relates to a case (9) comprising means for conveying said liquid from said housing volume (28) to said at least one collection volume (29), in which said conveying means are particularly configured to determine a transfer of said liquid to said at least one collection volume (29) in conjunction with a switching in the orientation of said case (9) from a first orientation to a second orientation.

A 10th aspect of the present invention, depending on the 9th aspect, relates to a case (9), in which said longitudinal axis (V) is arranged mainly along a vertical direction in said first orientation of said case (9) and is arranged mainly along a horizontal direction in said second orientation of said case (9).

An 11th aspect of the present invention, depending on the 9th aspect or the 10th aspect, relates to a case (9), in which said conveying means comprise at least one wall of said case (9) delimiting said housing volume (28) and directed, in particular curved or inclined, towards said at least one collection volume (29). A 12th aspect of the present invention, depending on any one of the aspects from the 1st aspect to the 11th aspect, relates to a case (9) comprising means for retaining said liquid in said at least one collection volume (29), said retaining means comprising in particular at least one insert in absorbent material, such as sponge or paper, removably housed in said at least one collection volume (29) and/or at least one wall interposed between said housing volume (28) and said at least one collection volume (29), partially separating said at least one collection volume (29) from said housing volume (28).

A 13th aspect of the present invention, depending on any one of the aspects from the 1st aspect to the 12th aspect, relates to a case (9) comprising drainage means of said liquid from said at least one collection volume (29), said drainage means comprising in particular at least one slit or hole at a delimiting wall of said at least one collection volume (29) and at least one door or cap in association with said slit or said hole, so as to selectively determine the obstruction and deobstruction thereof.

A 14th aspect of the present invention, depending on any one of the aspects from the 1st aspect to the 13th aspect, relates to a case (9) comprising at least one main element (9p) and a complementary element (9s), said complementary element (9s) being selectively applicable to said main element (9p) so as to allow said case (9) to assume at least one working condition and being selectively separable from said main element (9p) so as to allow said case (9) to assume at least one service condition.

A 15th aspect of the present invention, dependent on the 14th aspect, relates to a case (9), in which said main element (9p) extends between a first end region (10) and a second end region (15), in which said complementary element (9s), in said working condition of said case (9), is applied to said main element (9p) at said second end region (15).

A 16th aspect of the present invention, depending on the 15th aspect, relates to a case (9), said main element (9p) having in particular a substantially tubular shape, an insertion opening (11) configured to allow said blade (8) to be introduced in said housing volume (28) being obtained in said first end region (10) and a transition opening (12) in particular opposite said insertion opening (11) being obtained in said second end region (15), in which said complementary element (9s), in said working condition of said case (9), inhibits access to said housing volume (28) through said transition opening (12).

A 17th aspect of the present invention, depending on the 16th aspect, relates to a case (9), in which an access opening (18) is obtained in said complementary element (9s) and in which, in said working condition of said case (9), said access opening (18) is substantially superimposed on said transition opening (12), whereby said housing volume (28) extends continuously between said main element (9p) and said complementary element (9s).

An 18th aspect of the present invention, depending on any one of the aspects from the 14th aspect to the 17th aspect, relates to a case (9), in which said complementary element (9s) is a removable component of said case (9) and in which said case (9) comprises releasable fixing means, said fixing means being configured to anchor said complementary element (9s) to said main element (9p) in said working condition of said case (9).

A 19th aspect of the present invention, depending on the 18th aspect, relates to a case (9), in which said fixing means comprise at least one internal abutment wall (50) and at least one external abutment wall (51), said at least one internal abutment wall (50) belonging to a first element between said main element (9p) and said complementary element (9s), said at least one external abutment wall (51) belonging to a second element between said main element (9p) and said complementary element (9s), said at least one internal abutment wall (50) and said at least one external abutment wall (51) both extending along an extension direction orthogonal to said longitudinal axis (V) or mainly orthogonal to said longitudinal axis (V) and away from said longitudinal axis (V), said at least one internal abutment wall (50) operating in abutment on said at least one external abutment wall (51) in said working condition of said case (9).

A 20th aspect of the present invention, depending on the 19th aspect, relates to a case (9), in which an activation wall (52) extends from said first element adjacent to said at least one internal abutment wall (50), in particular seamlessly with said at least one internal abutment wall (50), said activation wall (52) being configured to generate, in conjunction with an approach of said second element to said first element along said longitudinal axis (V), a progressive localized deformation of said first element such as to determine a temporary approach of said at least one internal abutment wall (50) to said longitudinal axis (V), in particular so as to allow said working condition of said case (9) to be established starting from said service condition of said case (9).

A 21st aspect of the present invention, depending on the 20th aspect, relates to a case (9), in which said activation wall (52) has a substantially ramped trend, said activation wall (52) reaching in particular the maximum distance thereof from said longitudinal axis (V) at an interface between said activation wall (52) and said at least one internal abutment wall (50).

A 22nd aspect of the present invention, depending on the 20th aspect or the 21st aspect, relates to a case (9), in which an operating wall (54) extends from said second element adjacent to said at least one external abutment wall (51), in particular seamlessly with said at least one external abutment wall (51), at least part of said operating wall (54) surmounting at least part of said activation wall (52) in said working condition of said case (9), said operating wall (54) being configured to allow to impart a pressure such as to generate, through a deformation of said operating wall (54), a localized deformation of said first element such as to determine a temporary approach of said at least one internal abutment wall (50) to said longitudinal axis (V), of such an amount that said at least one internal abutment wall (50) is no longer in abutment on said at least one external abutment wall (51) and for which said second element can be moved away from said first element along said longitudinal axis (V), in particular so as to allow said service condition of said case (9) to be established starting from said working condition of said case (9).

A 23rd aspect of the present invention, depending on any one of the aspects from the 14th aspect to the 17th aspect, relates to a case (9), in which said complementary element (9s) is a component of said case (9) constrained to said main element (9p) whereby between said main element (9p) and said complementary element (9s) there is a degree of freedom and in which said case (9) comprises articulation means and coupling means, said articulation means being configured to allow the condition of said case (9) to be switched from said service condition to said working condition and/or from said working condition to said service condition, said coupling means being of a releasable type and being configured to inhibit said degree of freedom when said case (9) is in said working condition.

A 24th aspect of the present invention, depending on the 23rd aspect, relates to a case (9), in which said degree of freedom is a rotational degree of freedom and in which said articulation means comprise a hinge. A 25th aspect of the present invention, depending on any one of the aspects from the 14th aspect to the 24th aspect, relates to a case (9), in which said at least one collection volume (29) is inside said complementary element (9s) and in which, in said service condition of said case (9), said at least one collection volume (29) is accessible, in particular so as to operate a disposal of the liquid possibly contained in said at least one collection volume (29).

A 26th aspect of the present invention, depending on any one of the aspects from the 14th aspect to the 25th aspect, relates to a case (9), in which said complementary element (9s) is made at least partially of a transparent or translucent material, in particular so as to allow said at least one collection volume (29) to be visible to the outside in said working condition of said case (9).

A 27th aspect of the present invention, depending on any one of the aspects from the 14th aspect to the 26th aspect, relates to a case (9), in which said main element (9p) is made of a plastic material such as polyethylene and/or in which said complementary element (9s) is made of a plastic material such as polyethylene.

A 28th aspect of the present invention relates to an assembly (1) comprising:
- a tool, in particular a cutting and/or pruning tool, more in particular a chainsaw (7), said tool comprising a blade (8), and
- a case (9) according to any one of the aspects from the 1st aspect to the 27th aspect,
in which at least part of said blade (8) is arranged in the housing volume (28) of said case (9).

A 29th aspect of the present invention relates to a method for the disposal of liquid, in particular lubricating and/or protective oil, possibly released by a blade (8) of a tool, in particular a cutting and/or pruning tool, more in particular a chainsaw (7), in particular during a storage or transport step of said tool, comprising the steps of:
i) applying a case (9) to said blade (8), said case (9) delimiting a housing volume (28) of said blade (8) and at least one collection volume (29) of said liquid therein, said at least one collection volume (29) being in communication with said housing volume (28), said housing volume (28) extending along a longitudinal axis (V) in particular coinciding with the main extension direction of said blade (8), said case (9) comprising at least one main element (9p) and a complementary element (9s), said main element (9p) extending between a first end region (10) and a second end region (15) opposite said first end region (10), an insertion opening (11) configured to allow said blade (8) to be introduced into said housing volume (28) being obtained in said first end region (10), said complementary element (9s) being applied to said main element (9p) at said second end region (15), said at least one collection volume (29) being inside said complementary element (9s);
ii) conveying said liquid from said housing volume (28) to said at least one collection volume (29);
iii) separating said complementary element (9s) from said main element (9p) so as to make said at least one collection volume (29) accessible; and
iv) withdrawing said liquid from said at least one collection volume (29).

A 30th aspect of the present invention, depending on the 29th aspect, relates to a method, in which the step of conveying said liquid from said housing volume (28) to said at least one collection volume (29) is executed by means of a switching in the orientation of said case (9) from a first orientation to a second orientation, said longitudinal axis (V) being arranged mainly along a vertical direction in said first orientation of said case (9) and being arranged mainly along a horizontal direction in said second orientation of said case (9).

A 31st aspect of the present invention relates to a case (9) configured to be applied, in particular for the purposes of containment and/or protection, to a blade (8) of a tool, in particular of a cutting and/or pruning tool, more in particular of a chainsaw (7), when said blade (8) comprises a plurality of teeth to compose a cutting profile of said blade (8),
in which said case (9) delimits a housing volume (28) of said blade (8) therein, said housing volume (28) departing from an insertion opening (11), in particular in which said housing volume (28) extends along a longitudinal axis (V) in particular coinciding with the main extension direction of said blade (8) when said blade (8) is arranged in said housing volume (28),
in which said case (9) is provided with locking means configured to establish, when said blade (8) is arranged in said housing volume (28), a position maintenance condition of said case (9) with respect to said blade (8), in said position maintenance condition a relative movement of said case (9) being substantially inhibited with respect to said blade (8), in particular a relative movement of said case (9) with respect to said blade (8) along said longitudinal axis (V),
in which said locking means comprise at least one engagement element (4) configured to cooperate with at least one tooth (5) of said plurality of teeth so as to establish said position maintenance condition and
in which at least one portion of said at least one engagement element (4) is adapted to act as an effective portion in said position maintenance condition, said effective portion (77) of said at least one engagement element (4) being arranged, in said position maintenance condition, inside an interposition zone between said at least one tooth (5) and said insertion opening (11).

A 32nd aspect of the present invention, depending on the 31st aspect, relates to a case (9), in which, in said position maintenance condition, said at least one portion of said at least one engagement element (4) operates in engagement and/or in abutment on a face of said at least one tooth (5) facing said insertion opening (11).

A 33rd aspect of the present invention, depending on the 31st aspect or the 32nd aspect, relates to a case (9), in which said at least one engagement element (4) comprises an attachment portion (45), said attachment portion (45) allowing said effective portion (77) to be connected to an anchoring wall of said case (9), in particular said anchoring wall belonging to a wall of said case (9) substantially parallel to said longitudinal axis (V).

A 34th aspect of the present invention, depending on the 33rd aspect, relates to a case (9), in which a connecting arm (85) extends between said attachment portion (45) and said effective portion (77), said connecting arm (85) extending along a direction orthogonal to said longitudinal axis (V) or mainly orthogonal to said longitudinal axis (V) and approaching said longitudinal axis (V), in which said connecting arm (85) has a length comprised between 1 mm and 20 mm, in particular comprised between 2 mm and 10 mm, more in particular about 5 mm.

A 35th aspect of the present invention, depending on any one of the aspects from the 31st aspect to the 34th aspect, relates to a case (9), in which said case (9) is further provided with unlocking means configured to temporarily disable said locking means and to establish a free removal condition of said case (9) with respect to said blade (8), in said free removal condition a relative movement of said case (9) with respect to said blade (8) being allowed, in particular a relative movement of said case (9) with respect to said blade (8) along said longitudinal axis (V), in particular so as to allow said blade (8) to be led outside said housing volume (28).

A 36th aspect of the present invention, depending on the 35th aspect, relates to a case (9), in which, when said blade (8) is arranged in said housing volume (28), said unlocking means are adapted to allow said effective portion (77) to be led outside said interposition zone between said at least one tooth (5) and said insertion opening (11).

A 37th aspect of the present invention, depending on the 35th aspect or the 36th aspect, relates to a case (9), in which said unlocking means comprise an operating portion (43), said operating portion (43) being configured to allow a traction force to be exerted such as to generate a temporary switching of the condition of said case (9) from said position maintenance condition to said free removal condition.

A 38th aspect of the present invention, depending on the 37th aspect, relates to a case (9), in which said unlocking means comprise an operating portion (43), said operating portion (43) being configured to allow a traction force to be exerted such as to generate a temporary switching of the condition of said case (9) from said position maintenance condition to said free removal condition.

A 39th aspect of the present invention, depending on the 38th aspect, relates to a case (9), in which a pulling arm (95) extends between said operating portion (43) and said effective portion (77), said pulling arm (95) extending along a direction transverse to said longitudinal axis (V), in particular with an inclination comprised between 10° and 90°, more in particular with an inclination of about 60°, said pulling arm extending towards said insertion opening (11) and away from said longitudinal axis (V), so as to make the distance between said operating portion (43) and said longitudinal axis (V) greater than the distance between said attachment portion (45) and said longitudinal axis (V).

A 40th aspect of the present invention, depending on the 39th aspect, relates to a case (9), in which a slot (38) is obtained adjacent to said anchoring wall and in which said slot (38) is crossed by said pulling arm (95).

A 41 st aspect of the present invention, depending on the 39th aspect or the 40th aspect, relates to a case (9), in which the distance between said operating portion (43) and said insertion opening (11) is comprised between 10 mm and 200 mm, in particular comprised between 50 mm and 150 mm, more in particular about 100 mm.

A 42nd aspect of the present invention, depending on any one of the aspects from the 35th aspect to the 41st aspect, relates to a case (9), in which said free removal condition is an unstable condition of said case (9) and requires a suitable external stress exerted at said unlocking means, said position maintenance condition of said case (9) automatically restoring itself upon the exhaustion of said suitable external stress. A 43rd aspect of the present invention, depending on any one of the aspects from the 35th aspect to the 42nd aspect, relates to a case (9), in which said unlocking means are made in a single body with said locking means, in particular in which said pulling arm (95) is made in a single body with said connecting arm (85).

A 44th aspect of the present invention, depending on any one of the aspects from the 31st aspect to the 43rd aspect, relates to a case (9), in which said locking means are made in a single body with at least one wall of said case (9), in particular in which said attachment portion (45) and optionally also said connecting arm (85) are made in a single body with said anchoring portion.

A 45th aspect of the present invention, depending on the 44th aspect, relates to a case (9), in which said locking means are made of plastic material, such as polyethylene.

A 46th aspect of the present invention, depending on any one of the aspects from the 31st aspect to the 43rd aspect, relates to a case (9), in which said locking means are made in a separate body and thus fixed, in particular screwed or interlocked or welded, to at least one wall of said case (9), in particular in which said attachment portion (45) and optionally also said connecting arm (85) are made in a separate body and thus fixed, in particular screwed or interlocked or welded, to said anchoring portion.

A 47th aspect of the present invention, depending on the 46th aspect, relates to a case (9), in which said locking means are at least partially made of metallic material.

A 48th aspect of the present invention, depending on any one of the aspects from the 31st aspect to the 47th aspect, relates to a case (9), in which said case further delimits at least one liquid collection volume (29) therein, in particular lubricating and/or protective oil, possibly released by said blade (8), in particular during a storage or transport step of said tool, said at least one collection volume (29) being in communication with said housing volume (28), in particular in which said case (9) comprises means for conveying said liquid from said housing volume (28) to said at least one collection volume (29).

A 49th aspect of the present invention, dependent on the 48th aspect, relates to a case (9), in which said at least one collection volume (29) is positioned at a first side (48) and in which said locking means and optionally said unlocking means are positioned at a second side (49), said effective portion (77) being in particular positioned at said second side (49), said first side (48) and said second side (49) being opposite sides of said case (9) with respect to said longitudinal axis (V), in particular in which, in at least one storage position of said tool, said first side (48) coincides with a lower side of said case (9) and said second side (49) coincides with an upper side of said case (9).

A 50th aspect of the present invention, depending on the 48th aspect or the 49th aspect, relates to a case (9), said case (9) comprising at least one main element (9p) and a complementary element (9s), said complementary element (9s) being a removable component of said case (9) selectively applicable to said main element (9p) so as to allow said case (9) to assume at least one working condition selectively separable from said main element (9p) so as to allow said case (9) to assume at least one service condition, said main element (9p) extending between a first end region (10) and a second end region (15) opposite said first end region (10), said insertion opening (11) being obtained in said first end region (10), in which said complementary element (9s), in said working condition of said case (9), is applied to said main element (9p) at said second end region (15) and in which said at least one collection volume (29), in said service condition of said case (9), is accessible, in particular so as to operate a disposal of liquid possibly contained in said at least one collection volume (29).

A 51st aspect of the present invention, depending on the 50th aspect, relates to a case (9), in which said at least one collection volume (29) is inside said complementary element (9s).

A 52nd aspect of the present invention, depending on the 50th aspect or the 51st aspect, relates to a case (9), in which said locking means and optionally said unlocking means are associated with said main element (9p), said effective portion (77) being in particular associated with said main element (9p).

A 53rd aspect of the present invention, depending on the 52nd aspect, relates to a case (9), in which said locking means and optionally said unlocking means are made in a single body with said main element (9p) and said effective portion (77) is made in a single body with said main element (9p).

A 54th aspect of the present invention relates to an assembly (1) comprising:
- a tool, in particular a cutting and/or pruning tool, more in particular a chainsaw (7), said tool comprising a blade (8), said blade (8) comprising a plurality of teeth composing a cutting profile of said blade (8), and
- a case (9) according to any one of the aspects from the 31 st aspect to the 53rd aspect,
in which at least part of said blade (8) is arranged in the housing volume (28) of said case (9) and in which said position maintenance condition of said case (9) is selectively established by said locking means, in said position maintenance condition of said case (9), said at least one engagement element (4) cooperating with at least one tooth (5) of said plurality of teeth and said at least one engagement element (4) being arranged inside an interposition zone between said at least one tooth (5) and said insertion opening (11).

A 55th aspect of the present invention, depending on the 54th aspect, relates to an assembly (1), in which said locking means can be temporarily disabled by said unlocking means, so as to establish said free removal condition of said case (9).

A 56th aspect of the present invention, depending on the 54th aspect or the 55th aspect, relates to an assembly (1), in which said blade (8) comprises a bar (21) and a chain (22), a groove being obtained along at least part of the perimeter of said bar (21) and said chain (22) being slidably housed in said groove, and in which the teeth of said plurality of teeth belong to said chain (22).

A 57th aspect of the present invention, dependent on the 56th aspect, relates to an assembly (1), in which said tool further comprising a motor unit and a gripping system, in which said motor unit is configured to cause a sliding of said chain (22) along said groove during cutting and/or pruning operations executed by said tool and in which said gripping system is configured to allow the gripping of said tool during cutting and/or pruning operations executed by means of said tool.

A 58th aspect of the present invention, depending on the 57th aspect, relates to an assembly (1), in which said motor unit comprises at least one internal combustion engine powered with fuel or at least one electric motor with battery supply.

A 59th aspect of the present invention, depending on any one of the aspects from the 54th aspect to the 58th aspect, relates to said assembly (1) being configured to be able to be stored at least in a first storage position and in a second storage position, in said first storage position said longitudinal axis (V) being arranged along a substantially vertical direction and in said second storage position said longitudinal axis (V) being arranged along a substantially horizontal direction, in which said at least one collection volume (29), both in said first storage position and in said second storage position, is at a lower height with respect to said locking means.

A 60th aspect of the present invention, depending on the 59th aspect, relates to an assembly (1), in which said case (9) is configured to obtain a conveyance of liquid from said housing volume (28) to said at least one collection volume (29) in conjunction with a switching in the storage position of said assembly (1) from said first storage position to said second storage position.

### Description of the Drawings

An embodiment of the present invention will hereinafter be described in detail, by way of non-limiting explanation, with reference to the accompanying drawings, in which:
- figure 1 depicts an assembly between a case according to the present invention and a tool, the tool being in particular a chainsaw;
- figure 2 depicts a sub-assembly between a case according to the present invention and the blade of a tool, the tool being in particular the chainsaw of figure 1;
- figure 3 is a sectional view of the sub-assembly of figure 2;
- figure 4 is a detail of the sectional view of figure 3.
- figure 5 depicts an assembly between a case according to the present invention;
- figure 6 is a sectional view of the case of figure 5;
- figure 7 is a detail of the sectional view of figure 6.

In the accompanying drawings, the same parts are indicated with the same numerical references. Such numerical references are the same as will be used in the following detailed description and thus in the claims. It should be noted that the figures illustrate the subject matter of the invention by representations not to scale.

### Detailed description

### ASSEMBLY COMPRISING A TOOL AND A CASE

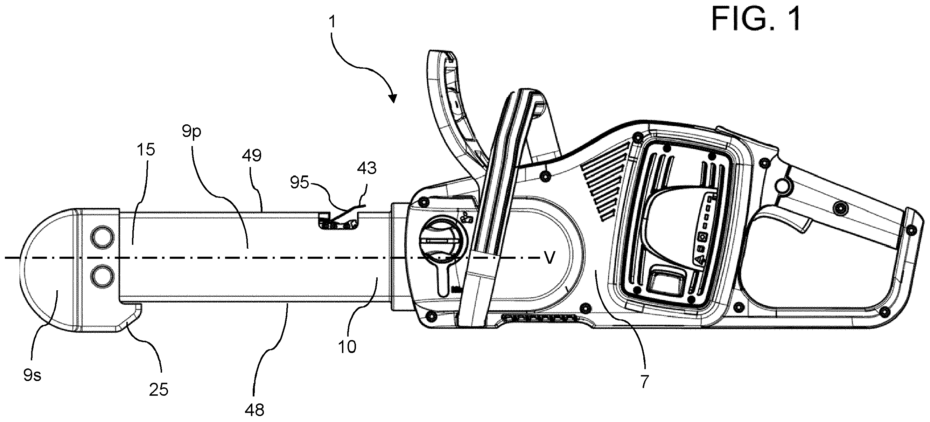

Figure 1 depicts an assembly 1 comprising a tool and a case 9 according to the present invention. The tool in figure 1 is a cutting and/or pruning tool and comprises a blade 8 to which the case 9 is applied in the depiction shown in figure 1, in which the tool is in particular during a storage or transport step. The tool in figure 1 is in particular a gardening tool, but the present invention should not be understood as limited in this sense, since the tool can also be used for example for cutting metal or concrete artefacts. In the event of use in the gardening field, the tool in figure 1 is in particular a chainsaw 7, but the present invention should not be understood as limited in this sense, since the tool can also be for example a hedge trimmer. Since the application to the blade 8 of a chainsaw 7 constitutes the preferred application of the case 9 according to the present invention, the case 9 according to the present invention will be described below with reference, if necessary, to the chainsaw 7 and the respective blade 8.

The chainsaw 7 referred to in the assembly 1 depicted in figure 1 is of a conventional type and therefore will not be described in detail below. The chainsaw 7 comprises a blade 8 also of a conventional type, which therefore will not be described in detail below.

The blade 8 comprises a bar 21, along the perimeter of which a groove is obtained. The blade 8 further comprises a chain 22, slidably received in the groove of the bar 21. The chain 22 envisages that teeth are obtained thereon (preferably integrally with the links of which the chain 22 is composed) defining the cutting profile of the blade 8.

In order to allow the sliding of the chain 22 along the groove of the bar 21 necessary to perform the cutting and/or pruning operations, the chainsaw 7 is provided with a motor unit (not visible in figure 1 as it is housed inside the casing) and advantageously also with one or more transmission members operating between the motor unit and the chain 22, the transmission members being in particular configured to allow the movement of the chain 22 with respect to the bar 21 in one rotation direction and to prevent the movement of the chain 22 with respect to the bar 21 in the opposite rotation direction. The motor unit can advantageously comprise an electric motor powered by one or more batteries, even more advantageously powered by one or more batteries of the removable and/or rechargeable type. Alternatively, the motor unit can comprise an endothermic motor fed with fuel.

In order to allow gripping during the cutting and/or pruning operations, the chainsaw 7 comprises a gripping system. Advantageously, the gripping system comprises one or more handles, by means of which the chainsaw 7 can be grasped with different orientations of the blade 8, thus allowing cutting and/or pruning according to a horizontal plane and/or cutting and/or pruning according to a vertical plane.

In order to avoid the sliding of the chain 22 along the groove of the bar 21 from determining excessive wear on the blade 8, as well as a problematic overheating, the chainsaw 7 is provided with a liquid supply system to the blade 8. Advantageously, the liquid supplied to the blade 8 of the chainsaw 7 is a lubricating and/or protective oil, whereby the liquid supply system can also be identified as oil supply system. The components of the supply system are not relevant for the purposes of the present invention, just as the type of liquid (which can be a biodegradable oil, in particular a vegetable oil) is not relevant for the purposes of the present invention. The components of the supply system are sized (consider above all of the outlet holes on the bar 21) as a function of the features of the lubricating and/or protective oil, in particular the viscosity of the lubricating and/or protective oil. By means of such a supply system, the liquid reaches the groove of the bar 21, where it allows the sliding of the chain 22 to occur with low friction and without generating an overheating of the blade 8.

The case 9 is applied to the blade 8 during the storage and/or transport steps of the chainsaw 7, to be then removed so as to prepare the chainsaw 7 for an operating condition. The storage of the chainsaw 7 envisages that the chainsaw 7 can be arranged at least in a first storage position and in a second storage position.

In the first storage position, the chainsaw 7 is oriented vertically with the blade 8 arranged at the bottom (i.e., below the casing), while in the second storage position, the chainsaw 7 is oriented horizontally. The chainsaw 7 can be arranged in the first storage position with the help of the gripping system, the engagement of the gripping system being possible, for example to a support hook, so as to keep the chainsaw 7 suspended.

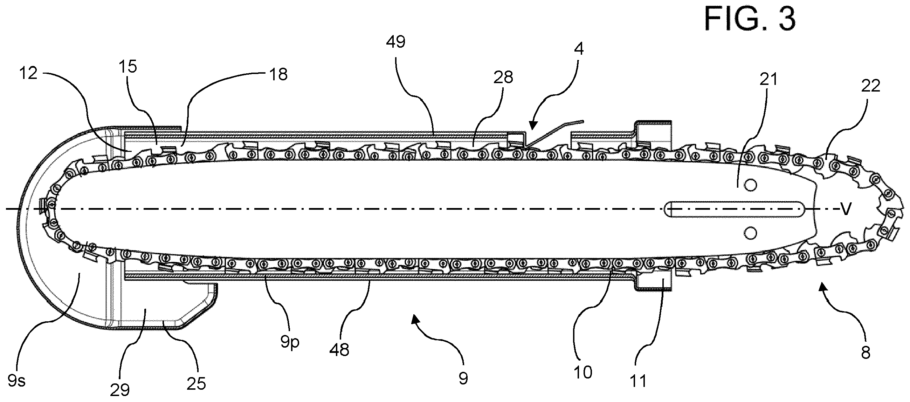

As can be seen especially in figure 3, the case 9 extends along a longitudinal axis V which advantageously coincides with the main extension direction of the blade 8 when the latter is correctly positioned inside the case 9. In particular, the case 9 delimits a housing volume 28 for the containment of the blade 8. The housing volume 28 communicates with the outside through an insertion opening 11, the latter being the opening through which the blade 8 is introduced inside the case 9 at the end of an operating step, as well as the opening through which the blade 8 is extracted from the case 9 at the end of a storage and/or transport step.

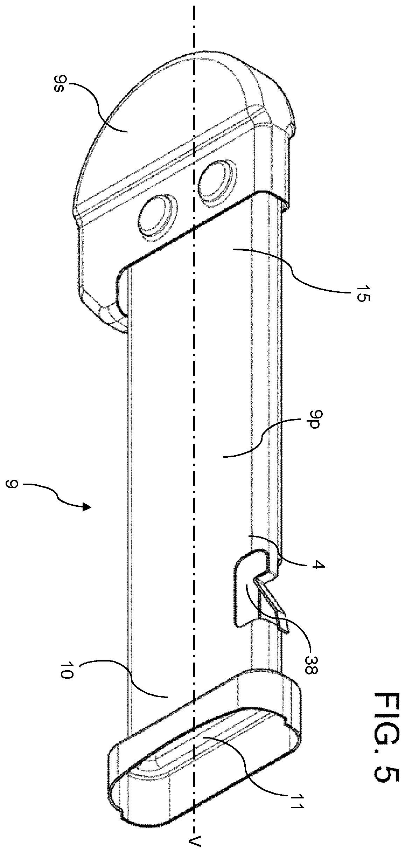

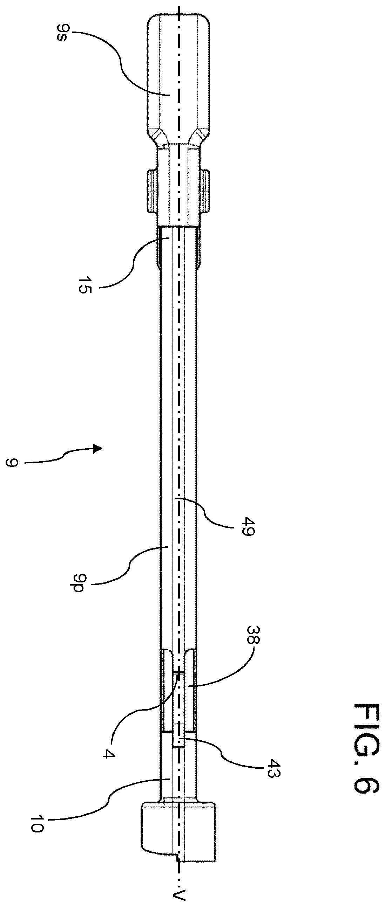

The insertion opening 11 can have an ideally symmetrical shape and be ideally orthogonal to the longitudinal axis V. However, embodiments of the case 9 (one of which is shown in figures 5 and 6) are not excluded in accordance with the present invention, in which the insertion opening 11 instead has an asymmetrical shape and/or has a predetermined inclination with respect to a plane orthogonal to the longitudinal axis V. In fact, the shape of the insertion opening 11 is defined by the shape of the initial portion of the case 9, such a shape being typically adapted to the shape of the casing of the chainsaw 7, in order to obtain a correct shape coupling between the chainsaw 7 and the case 9.

### CASE WITH COLLECTION VOLUME

According to the invention, the case 9 further delimits at least one collection volume 29, the housing volume 28 and the collection volume 29 being in communication with each other. The main function carried out by the collection volume 29 is to allow an accumulation of the liquid released by the blade 8 in the storage and/or transport steps, thus placing such a liquid in the condition of being disposed of in a controlled manner and, where possible, of being reused or recovered, with obvious benefits in economic terms and/or environmental sustainability. Advantageously, the collection volume 29 has a capacity comprised between 0.01 litre and 1 litre, preferably a capacity comprised between 0.1 litre and 0.5 litre, more preferably a capacity comprised between 0.2 litre and 0.3 litre.

The configuration of the case 9 according to the present invention, in particular of the housing volume 28 and/or of the collection volume 29, is such that the liquid flow from the housing volume 28 towards the collection volume 29 is facilitated both when the chainsaw 7 is in the aforesaid first storage position, and when the chainsaw 7 is in the aforesaid second storage position.

In this regard, while the housing volume 28 is ideally symmetrical with respect to the longitudinal axis V, the collection volume 29 intentionally has an asymmetrical shape with respect to the longitudinal axis V, protruding from the housing volume 28 transversely to the longitudinal axis V and away from the longitudinal axis V. In other words, the housing volume 28 extends from the insertion opening 11 while remaining ideally symmetrical with respect to the longitudinal axis V as long as, at a distal position with respect to the insertion opening 11, such an ideal symmetry is interrupted by the collection volume 29 extending starting from a portion of the housing volume 28 and away from the longitudinal axis V.

Without prejudice to a limited portion of the housing volume 28 adjacent to the insertion opening 11 which has a greater width (so as to allow an easier insertion of the blade 8 in the case 9 and/or so as to allow such a portion to embrace the end part of the casing), in the embodiment of the present invention depicted in the figures, the housing volume 28 has an ideally constant width (such a width can be comprised between 50 mm and 150 mm, preferably about 80 mm), and then such a width progressively decreases at the end portion of the housing volume 28.

The development of the collection volume 29 peripherally to the housing volume 28 determines a localised increase in the width of the case 9 in a distal position with respect to the insertion opening 11, i.e., at the end portion of the housing volume 28. Such a localized increase in width can lead the collection volume 29 to emerge, orthogonally to the longitudinal axis V, by a distance comprised between 1 mm and 50 mm, preferably about 10 mm, with respect to the portion of the housing volume 28 with ideally constant width. Advantageously, the distance between the geometric centre of gravity of the collection volume 29 and the longitudinal axis V exceeds the width of the housing volume 28 in the relative portion of ideally constant width.

Furthermore, as can be seen in the figures, in order to obtain an adequate capacity of the collection volume 29 without significantly altering the size of the case 9, advantageously an increase in the thickness of the case 9 is also contemplated at the collection volume 29 (i.e., a dimensional increase in the direction orthogonal to both the longitudinal axis V and the width of the case 9). In particular, the case 9 can go from a thickness of the order of 1 mm and 50 mm, preferably about 15 mm, at the portion of the housing volume 28 with an ideally constant width, to a thickness of the order of 1 mm and 50 mm, preferably about 20 mm, at the collection volume 29.

The housing volume 28 and the collection volume 29 are both delimited by walls of the case 9. Furthermore, walls can be included inside the case 9, partially separating between the housing volume 28 and the collection volume 29. The walls delimiting the housing volume 28, at least in the relative portion of ideally constant width, have a tubular configuration with a roughly quadrangular section. The collection volume 29 is instead at least partially delimited by a wall of the case 9 shaped so as to define a convex loop 25, for example a roughly semicircular loop or a roughly trapezoidal loop. The function of such a convex loop 25 is to define a cavity therein of suitable shape and size to contain the amount of liquid which is expected to accumulate in the collection volume 29.

The configuration of the case 9 according to the present invention is intended to facilitate a transfer to the collection volume 29 of the liquid released by the blade 8 during a storage or transport step of the chainsaw 7. In this regard, the case 9 is provided with at least one effective liquid conveyor between the housing volume 28 and the collection volume 29. Such a liquid conveyor can be obtained by providing the case 9 with at least one additional element, such as a baffle capable of directing the liquid from the housing volume 28 to the collection volume 29, and/or by suitably configuring at least one wall of the case 9, in particular at least one of the walls of the case 9 defining the housing volume 28 and/or the collection volume 29, so that such a wall can carry out, in addition to a containment function, also a liquid conveying function.

In the embodiment of the case 9 according to the present invention, illustrated by way of example in the accompanying figures, the liquid conveyor from the housing volume 28 to the collection volume 29 is obtained by suitably shaping, in particular inclining and/or curving, a wall of the case 9 arranged at the interface between the housing volume 28 and the collection volume 29, so that such a wall can direct the flow of liquid, thus facilitating the outflow from the housing volume 28 and the consequent collection.

The liquid conveyor from the housing volume 28 to the collection volume 29 can be obtained by shaping one of the walls forming the case 9, so as to obtain a loop contiguous with the convex loop 25 which defines at least part of the collection volume 29. In particular, such a contiguous loop can be distinct from the convex loop 25, being advantageously connected or tangent to the convex loop 25, or it can form a single loop with the convex loop 25, forming an extension of the latter.

Advantageously, the liquid conveyor (as for example occurs adopting the configuration of the case 9 depicted in the accompanying figures) is configured to determine a transfer of the liquid from the housing volume 28 to the collection volume 29, in conjunction with a switching from the aforesaid first storage position of the chainsaw 7 to the aforesaid second storage position of the chainsaw 7. In such a case, the liquid released by the blade 8 tends to accumulate by gravity in the distal portion of the housing volume 28, after which, by means of a rotation of the case 9 (which the operator can implement by grasping the gripping system of the chainsaw 7), a transfer of the liquid is generated which, guided by the liquid conveyor, reaches the collection volume 29, where it can be withdrawn so as to perform the disposal thereof.

### METHOD ASSOCIATED WITH A CASE WITH COLLECTION VOLUME

The configuration of the case 9 according to the present invention allows to have an innovative method for the disposal of liquid released by the blade 8 of a cutting and/or pruning tool. The method according to the invention can especially be executed in conjunction with a storage or transport step of the chainsaw 7, in which the blade 8 can release lubricating and/or protective oil.

In a first step of the method, the case 9 (particularly configured as previously described and/or as depicted in the accompanying figures) is applied to the blade 8. Such a first step of the method envisages that the blade 8 is introduced in the case 9 through the insertion opening 11 and then made to penetrate in the housing volume 28, where the blade 8 is left stationary, with the housing volume 28 remaining in communication with the collection volume 29. The first step of the method can be executed by arranging the chainsaw 7 in the aforesaid first storage position, in which the chainsaw 7 has an ideally or mainly vertical orientation and in which the blade 8 is arranged below, preferably by engaging the gripping system for example to a support hook. Alternatively, the first step of the method can be executed by arranging the chainsaw 7 in the aforesaid second storage position, in which the chainsaw 7 has an ideally or mainly horizontal orientation, preferably so as to place the collection volume 29 at a lower height with respect to the housing volume 28. With the execution of the first step of the method, the blade 8 becomes susceptible to undesirably releasing liquid inside the case 9.

In a second step of the method, the liquid released by the blade 8 is transferred from the housing volume 28 to the collection volume 29. Such a second step of the method can make use of at least one liquid conveyor of the case 9 operating between the housing volume 28 and the collection volume 29 (such a liquid conveyor can comprise a wall of the case 9 which is inclined and/or curved towards the collection volume 29). If in the first step of the method the chainsaw 7 has been arranged in the first storage position, the second step of the method can comprise a controlled switching in the orientation of the chainsaw 7 from the aforesaid first orientation to the aforesaid second orientation or, the case 9 having previously been removed from the blade 8 of the chainsaw 7, by means of a controlled switching in the orientation of the case 9 from an ideally or mainly vertical orientation to an ideally or mainly horizontal orientation. Following such a controlled switching (either of the orientation of the chainsaw 7, or of the orientation of the case 9 only), the liquid previously released by the blade 8 reaches the collection volume 29 by gravity. If in the first step of the method the chainsaw 7 has instead been arranged in the second storage position (and the collection volume 29 has been placed at a lower height with respect to the housing volume 28), the transfer of liquid to the collection volume 29 occurs by gravity, without requiring any change in orientation.

The transfer of the liquid into the collection volume 29 can be followed by conservation of the liquid in the collection volume 29. Such conservation can be obtained by maintaining a horizontal or mainly horizontal orientation for the assembly 1 or for the case 9 alone, and can also be facilitated by any elements included in the case 9 to counteract the return of the liquid towards the housing volume 28, such as one or more internal walls partially separating between the housing volume 28 and the collection volume 29. Furthermore, the conservation of the liquid in the collection volume 29 can be obtained by retaining the liquid in the collection volume 29 with the aid of material housed in the collection volume 29 and having the capacity to absorb the liquid, such material being for example sponge or paper. Advantageously, the absorbent material can be removably housed in the collection volume 29, so that it can be reconditioned or replaced when it is no longer capable of absorbing further liquid.

In a third step of the method, the collection volume 29 is put in communication with the outside and/or made accessible from the outside. The collection volume 29 can be put in communication with the outside especially when the case 9 comprises means for draining the liquid from the collection volume 29, which have the ability to be selectively placed in an obstructed state or an unobstructed state (for example, the drainage means can include at least one slit and/or at least one hole made on the case 9 at a delimiting wall of the collection volume, in which case at least one door and/or a cap being included to operate switches in the state of the drainage means). The collection volume 29 can be made accessible from the outside especially when the case 9 comprises separation means allowing a part of the case 9 to be selectively moved away from the rest of the case 9. In a preferred embodiment of the present invention, the case 9 provided with separation means consists of at least one main element 9p and one complementary element 9s (the collection volume 29 belonging in particular to the complementary element 9s), as will be described in detail below with reference to the accompanying figures. Since the case 9 according to the invention has such a configuration, the third step of the method can conveniently be actuated by making the collection volume 29 accessible by separating the complementary element 9s from the main element 9p.

In a fourth step of the method, the liquid is withdrawn from the collection volume 29, in order to operate a disposal thereof and consequently reduce the environmental impact of the chainsaw 7. When the case 9 comprises drainage means, the liquid can be withdrawn from the collection volume 29 by bringing the drainage means into the unobstructed state, and then restoring the obstructed state by emptying the collection volume 29. When the case 9 comprises separation means, the case 9 being in particular of the type with a main element 9p and a complementary element 9s, the liquid can be withdrawn by pouring it from the collection volume 29 to the outside, for example into a storage container.

### CASE WITH LOCKING MEANS

According to the invention, the case 9 is provided with locking means, by means of which it is possible to inhibit a relative movement of the case 9 with respect to the blade 8 at least along the direction defined by the longitudinal axis V. Thereby, the case 9 is stably kept in position with respect to the blade 8 when the blade 8 is arranged in the housing volume 28. The action of inhibiting the movement of the blade 8 exerted by the locking means according to the present invention can reinforce the inhibitory action possibly exerted by the portion of the case 9 adjacent to the insertion opening 11 which, by making an interlocking and/or a shape coupling with the end portion of the casing of the chainsaw 7, can establish, in the assembly 1, one or more degrees of constraint between the case 9 and the blade 8.

The locking means according to the invention are effectively designed according to the poka-yoke methodology and can thus fulfil the further function of placing limits on the mode in which the case 9 is applied to the blade 8. In particular, the locking means can force the operator to apply the blade 8 to the case 9 necessarily according to the relative orientation such that, when the assembly 1 is then in the aforesaid second storage position of the chainsaw 7, the collection volume 29 will be located below the housing volume 28 and the liquid released by the blade 8 can consequently reach the collection volume 29 by gravity.

Therefore, the case 9 according to the present invention is configured so that, in the assembly 1, the collection volume 29 is at a lower height with respect to the locking means both when the assembly 1 is in the first storage position and when the assembly 1 is in the second storage position. Such a configuration of the case 9 can be obtained by obtaining the locking means at a wall of the case 9 located, with respect to the longitudinal axis V, on the opposite side with respect to the wall in which the convex loop 25 is obtained, which at least partially delimits the collection volume 29.

In other words, the collection volume 29 is positioned at a first side 48 of the case 9, while the locking means are positioned at a second side 49 of the case 9. Such a first side 48 and such a second side 49 are in particular opposite sides of the case 9 with respect to the longitudinal axis V. Advantageously, in at least one storage position of the chainsaw 7 (in particular in the second storage position), said first side 48 coincides with a lower side of the case 9 and said second side 49 coincides with an upper side of the case 9.

Preferably, in the case 9 according to the present invention, the locking means and the collection volume 29 are spaced apart not only along the direction transverse to the longitudinal axis V, but also along the direction defined by the longitudinal axis V, in particular the locking means being obtained at a portion of the case 9 arranged adjacent to the insertion opening 11 and the collection volume 29 obtained at a portion of the case 9 arranged in a distal position with respect to the insertion opening 11.

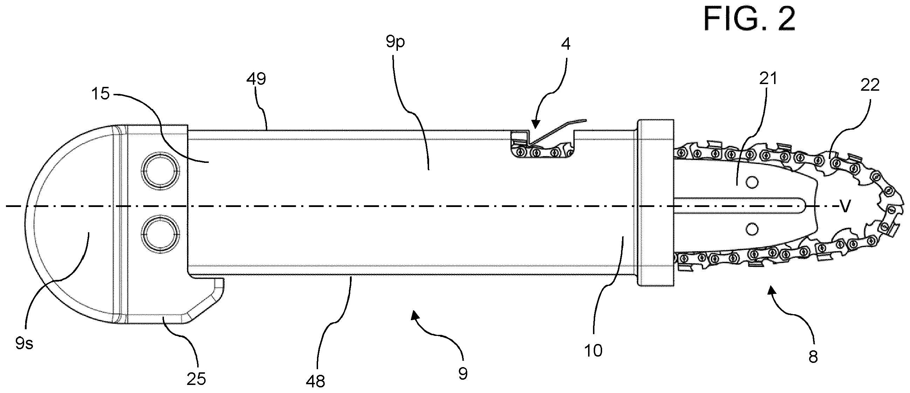

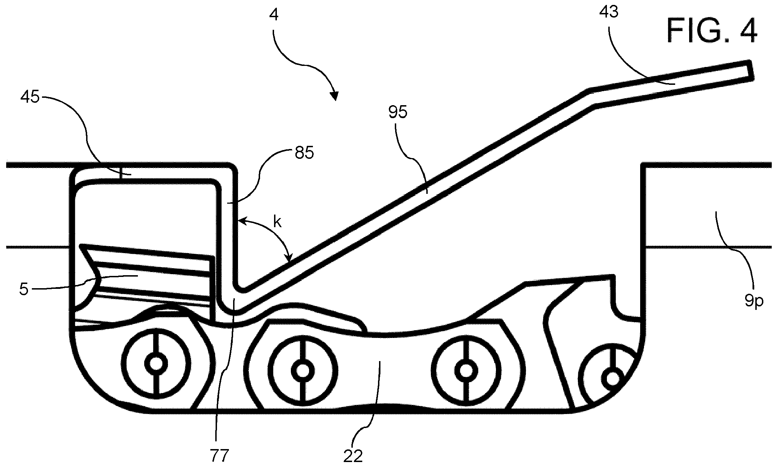

A particularly advantageous configuration for the locking means is depicted in the accompanying figures. In particular, in the views referred to in figures 1 to 3, as well as in the detail referred to in figure 4, it is shown how the locking means adopting such a particularly advantageous configuration cooperate with the chain 22 of the blade 8 so as to keep the case 9 anchored to the blade 8 in the correct position.

The locking means, as shown in the figures, comprise at least one engagement element 4 which, in use (i.e., when the case 9 is applied to the chainsaw 7 and the blade 8 is arranged in the housing volume 28), cooperates with at least one tooth 5 of the chain 22. In particular, at least one portion of the engagement element 4 acts, in use, as an effective portion 77, going to be arranged inside an interposition zone between the tooth 5 of the chain 22 and the insertion opening 11 of the case 9. Said effective portion 77, interposing itself between the tooth 5 and the insertion opening 11, in addition to inhibiting the sliding of the chain 22 along the groove of the bar 21, is placed, in use, in a position in which it interferes with the movement through which the blade 8 is normally extracted from the case 9, selectively blocking said movement, so that a condition of keeping the case 9 in position with respect to the blade 8 is established when the effective portion 77 is in engagement with the tooth 5 of the chain 22.

Advantageously, the effective portion 77 of the engagement element 4 has a shape complementarity (or, at least, a shape compatibility) with at least one face of the tooth 5 of the chain 22, in particular with the face of the tooth 5 facing the insertion opening 11 when the blade 8 is in the housing volume 28. According to an embodiment of the present invention, the position maintenance condition of the case 9 with respect to the bar 8 is obtained by interlockingly coupling the effective portion 77 of the engagement element 4 to the tooth 5 of the chain 22. According to a further embodiment of the present invention, the position maintenance condition of the case 9 with respect to the bar 8 is obtained by bringing the effective portion 77 of the engagement element 4 in abutment on the tooth 5 of the chain 22, advantageously so that the effective portion 77 exerts a predetermined pressure against the tooth 5.

The detailed view referred to in figure 4 shows, by way of non-limiting explanation, a particularly advantageous configuration of the engagement element 4 of the case 9 according to the present invention. According to such a configuration, the engagement element 4 departs from an attachment portion 45, i.e., from a portion by means of which the engagement element 4 is connected to a wall of the case 9 (in particular to a wall of the case 9 substantially parallel to the longitudinal axis V) which therefore acts as an anchoring wall for the engagement element 4. In a particularly advantageous embodiment of the present invention, the attachment portion 45 extends seamlessly from the anchoring wall, and measures (such as a sudden reduction in thickness) can also be envisaged to give the attachment portion 45 features of elasticity which are superior with respect to the walls of the case 9.

Between the attachment portion 45 and the effective portion 77 there is a connecting arm 85 extending from the attachment portion 45 towards the longitudinal axis V, whereby the effective portion 77 is located at the end of the connecting arm 85 placed at a shorter distance with respect to the longitudinal axis V. Preferably, the connecting arm 85 extends along a direction orthogonal to the longitudinal axis V or mainly orthogonal to the longitudinal axis V. Preferably, the connecting arm 85 has a length comprised between 1 mm and 20 mm, in particular comprised between 2 mm and 10 mm, more in particular about 5 mm.

According to the invention, the case 9 is further provided with unlocking means, by means of which the operator is allowed to determine a temporary disabling of the locking means, intentionally interrupting the position maintenance condition of the case 9 and temporarily establishing a free removal condition of the case 9 from the blade 8. In such a free removal condition, the case 9 can be moved with respect to the blade 8 at least along the direction defined by the longitudinal axis V and can therefore be removed from the chainsaw 7, for example so as to allow the chainsaw 7 to execute cutting operations, the blade 8 having been led outside of the housing volume 28. The free removal condition therefore presents itself as an unstable condition of the case 9 and requires a suitable stress exerted by the operator through the unlocking means, the position maintenance condition automatically restoring itself when the external stress is exhausted. The extent of the external stress necessary to determine a switching from the position maintenance condition of the case 9 to the free removal condition can depend, for example, on the elastic features of the locking means and/or of the unlocking means.

The unlocking means are in particular configured to obtain a variation of the position assumed by the effective portion 77 with respect to the tooth 5, so that the effective portion 77, starting from an engagement condition with the tooth 5 of the chain 22, is finally led outside the interposition zone between the tooth 5 and the insertion opening 11, with the result of removing the interference by means of which, in the position maintenance condition, the blade 8 is instead prevented from being extracted from the case 9.

A particularly advantageous configuration for the unlocking means is depicted in the accompanying figures, from which it is clear how the unlocking means intervene on the locking means for the purpose of a temporary disabling thereof.

As shown in the figures, the unlocking means can determine a temporary switching of the condition of the case 9 from the position maintenance condition to the free removal condition by subjecting the effective portion 77 to a traction force, which the operator can apply at an operating portion 43, given that such an operating portion 43 is a portion of the unlocking means which is integral with the effective portion 77 of the locking means or otherwise connected to the effective portion 77 of the locking means.

In order to allow the operator an easy and ergonomic activation of the unlocking means, the operating portion 43 is advantageously arranged near the insertion opening 11 of the case 9. In particular, the operating portion 43 is located, with respect to the insertion opening 11, at a distance comprised between 1 mm and 100 mm, in particular comprised between 5 mm and 50 mm, more in particular about 20 mm. According to an advantageous configuration, the operating portion 43 is rigidly connected to the effective portion 77 by means of a pulling arm 95 which extends from the effective portion 77 away from the longitudinal axis V. Advantageously, the pulling arm 95 extends from the effective portion 77 seamlessly with the connecting arm 85, the pulling arm 95 being inclined, with respect to the connecting arm 85, by an angle k comprised between 10° and 90°, preferably by an angle k comprised between 40° and 75°, more preferably by an angle k of about 60°.

Therefore, the connecting arm 85 and the pulling arm 95 together form a V-shaped structure, in which the effective portion 77 (i.e., the portion of the engagement element 4 which engages the tooth 5 of the chain 22) is located at the vertex of the V-shaped structure.

Advantageously, the engagement element 4 is housed in a slot 38 of the case 9 obtained adjacent to the anchoring wall. Such a slot 38 fulfils, inter alia, the function of granting the operator full visibility of the engagement element 4 and of the tooth 5 of the chain 22 with which the engagement element 4 cooperates, as well as the function of granting the engagement element 4 the space and/or the flexibility necessary for the deformations required to determine a switching of the condition of the case 9 from the position maintenance condition to the free removal condition, as well as a reverse switching of the condition of the case 9 from the free removal condition to the position maintenance condition.

The slot 38 of the case 9 houses in particular the V-shaped structure formed in combination by the connecting arm 85 and the pulling arm 95, the length of the pulling arm 95 advantageously being greater than the ratio between the length of the connecting arm 85 and the cosine of the angle k between the connecting arm 85. Thereby, in fact, the pulling arm 95 can cross the slot 38 and the operating portion can be comfortably positioned outside the surrounding walls of the case 9.

According to a preferred embodiment of the present invention, the unlocking means are made integrally with the locking means, which in turn are integrally made with at least one wall of the case 9. In particular, as can be seen from what is depicted in figure 4, the pulling arm 95 is in a single body with the connecting arm 85 and/or the connecting arm 85 is in a single body with the attachment portion 45 and/or the attachment portion 45 is in a single body with the portion of the wall of the case 9 acting as an anchoring portion. Alternatively, the locking means (and possibly also the unlocking means made integrally with the locking means) are made in a separate body and then fixed to a wall of the case 9, for example screwed or interlocked or welded. In particular, the fixing of the locking means to the case 9 can make use of a mechanical connection such as a connection by means of interlocking and/or hooks and/or screws or a connection by welding or a connection by gluing, at the interface between the connecting arm 85 and the attachment portion 45 or at the interface between the attachment portion 45 and the anchoring portion. The locking means (and possibly also the unlocking means) are made of plastic material, the elastic modulus of the plastic material being capable of conferring adequate flexibility to the locking means. Alternatively, the locking means (and possibly also the unlocking means) are made of metallic material.

### CASE WITH MAIN ELEMENT AND COMPLEMENTARY ELEMENT

Although it is absolutely evident that the two inventions described above exhibit important synergies, it should be emphasized that the inclusion of the collection volume 29 and the inclusion of the locking means are in any case independent inventions, given that both inventions are capable of achieving significant technical effects in themselves, and not only when in combination with each other.

This having been specified, it should be noted that, according to the embodiment shown in the accompanying figures, the case 9 adopts a configuration which, rightly, can be considered as a further invention and which at the same time is considerably effective in amplifying the advantageous technical effects in particular of the inclusion of the collection volume 29, such a further invention being the inclusion of a modular case 9 comprising a part aimed at protecting the blade 8 and a part aimed at collecting the liquid, i.e., the lubricating and/or protective oil.

According to the configuration referred to in the accompanying figures (see in particular what is shown in figures 5 to 7), the case 9 comprises a main element 9p and at least one complementary element 9s selectively applicable to the main element 9p. When the complementary element 9s is applied to the main element 9p, the case 9 assumes a working condition, being capable of covering and protecting the blade 8 of the chainsaw 7. When the complementary element 9s is separated from the main element 9p, the case 9 assumes a service condition, the case 9 being able in particular to be the object of a cleaning and/or reconditioning intervention.

Advantageously, in the service condition of the case 9 established as a result of the separation of the complementary element 9s from the main element 9p, the operator can access the collection volume 29, the latter being put in communication with the outside and/or made accessible from the outside. By separating the complementary element 9s from the main element 9p, the third step of the method described above is then executed for the disposal of the liquid, in particular lubricating and/or protective oil, released by the blade 8 of a cutting and/or pruning tool, such as in particular the chainsaw 7, during a storage or transport step of the tool. Preferably, the collection volume 29 is inside the complementary element 9s, whereby the separation of the complementary element 9s from the main element 9p determines in particular the isolation and/or removal from the main element 9p of the liquid released by the blade 8 during storage or transport of the tool and conveyed into the collection volume 29.

Since the complementary element 9s has therefore been separated from the main element 9p, the operator can execute the fourth step of the method described above for the disposal of the liquid, in particular lubricating and/or protective oil, released by the blade 8 of a cutting and/or pruning tool, such as in particular the chainsaw 7, during a storage or transport step of the tool. In fact, the liquid can be withdrawn from the collection volume 29 (i.e., from the complementary element 9s), in particular so as to operate the disposal thereof.

Therefore, the distinction between the configuration of the case 9 shown in the accompanying figures and the technical solutions known in the state of the art (cited in the introductory part of the present description) is rather clear, also as regards the feature of the case 9 to be obtained by means of the composition of at least two elements (i.e., the main element 9p and the complementary element 9s) mutually separable from each other. In fact, although in some of the known technical solutions of cases for chainsaws there is a complementary member separable from a main body, none of the known technical solutions exhibits a configuration suitable for the collection and subsequent disposal of the lubricating and/or protective oil released by the blade of the chainsaw.

In a preferred embodiment of the present invention, the main element 9p extends from a first end region 10 of the case 9, said first end region 10 being the region of the case 9 in which the insertion opening 11 is obtained, or the region of the case 9 which, in the assembly 1, is arranged adjacent to the casing of the chainsaw 7. The extension of the main element 9p advantageously occurs along the longitudinal axis V according to a substantially tubular conformation, up to a second end region 15 which is therefore opposite the first end region 10 in the direction defined by the longitudinal axis V. Advantageously, the main element 9p roughly has the shape of an internally hollow parallelepiped to allow the housing of the blade 8 of the chainsaw 7.

In the preferred embodiment of the present invention depicted in the accompanying figures, the second end region 15 is configured to allow a releasable application of the complementary element 9s to the main element 9p and consequently a switching between the working and service conditions of the case 9. A transition opening 12 is obtained in the second end region 15 of the main element 9p (which is opposite the insertion opening 11 along the direction defined by the longitudinal axis V), while an access opening 18 is obtained in the complementary element 9s. The transition opening 12 of the main element 9p interfaces with the access opening 18 of the complementary element 9s, there being in particular coincidence and/or correspondence of shape between the transition opening 12 of the main element 9p and the access opening 18 of the complementary element 9s. Preferably, at least in the working condition of the case 9, a contiguous and/or overlapping relationship is established between the transition opening 12 of the main element 9p and the access opening 18 of the complementary element 9s, in light of which the housing volume 28 extends continuously between the main element 9p and the complementary element 9s.

In a preferred embodiment of the present invention, the complementary element 9s is a removable component of the case 9, which, once removed, establishes the service condition of the case 9 and allows the operator to access the collection volume 29, so as to execute the withdrawal and disposal of the liquid. In the working condition of the case 9, the complementary element 9s instead inhibits access to the collection volume 29 and also inhibits access to the housing volume 28 through the transition opening 12 of the main element 9p.

The locking means and preferably also the unlocking means are advantageously associated with the main element 9p of the case 9. In particular, the main element 9p of the case 9 is made of a plastic material such as polyethylene and is in particular in a single body with the locking means and with the unlocking means. In fact, figure 4, which refers to a preferred embodiment of the present invention, shows that the attachment portion 45, the connecting arm 85, the pulling arm 95 and the operating portion 47 are constructed integrally with the walls of the main element 9p.

The complementary element 9s is advantageously made of a transparent or translucent material, so that the operator is granted visibility of the collection volume 29 even when the collection volume 29 is not accessible from the outside, i.e., when the case 9 is in the working condition. Thereby, the operator can observe the level reached by the liquid in the collection volume 29 and decide whether to execute a withdrawal. A plastic material such as polyethylene can be used to make the complementary element 9s.

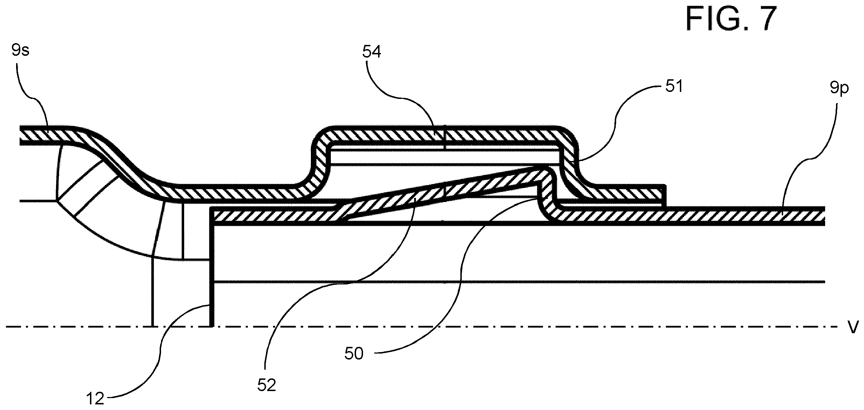

Figure 7 illustrates an embodiment of releasable type fastening means usable within the scope of the present invention to anchor the complementary element 9s to the main element 9p in the working condition of the case 9.

The fixing means comprise an internal abutment wall 50 and an external abutment wall 51. In this regard, it should be emphasized that, although in the depiction the internal abutment wall 50 belongs to the main element 9p and the external abutment wall 51 belongs to the complementary element 9s, the embodiment referred to in figure 7 is not limited in this sense, as the internal abutment wall can alternatively belong to the complementary element and the external abutment wall belong to the main element. The internal abutment wall 50 and the external abutment wall 51 both extend transversely, in particular orthogonally, to the longitudinal axis V and away from the longitudinal axis V. In the working condition of the case 9, the internal abutment wall 50 interferes with the external abutment wall 51, preventing the complementary element 9s from inadvertently moving away from the main element 9p and consequently preventing unwanted switching of the condition of the case 9 from the working condition to the service condition.

In order to allow a selective switching of the condition of the case 9 from the service condition to the working condition, an activation wall 52 is obtained adjacent to the internal abutment wall 50. The activation wall 52 extends seamlessly with the internal abutment wall 50 starting from the distal end of the internal abutment wall 50. The activation wall 52 is preferably obtained integrally with the internal abutment wall 50. Advantageously, the activation wall 52 is substantially ramped and reaches the maximum distance thereof from the longitudinal axis V where the activation wall 52 joins the internal abutment wall 50.

During the mutual approach between the main element 9p and the complementary element 9s intended to position the internal abutment wall 50 and the external abutment wall 51 in mutual abutment (so as to establish the working condition of the case 9 starting from the service condition), the activation wall 52 is pressed towards the longitudinal axis V, since such a mutual approach occurs by means of a translation along the longitudinal axis V. The pressure of the activation wall 52 in the direction of the longitudinal axis V causes temporary deformations of mutual portions of the main element 9p and/or the complementary element 9s. Such deformations progressively increase until the external abutment wall 51 manages to cross the activation wall 52. At such a time, the deformations are exhausted, so that the internal abutment wall 50 and the activation wall 52 suddenly return to their original dimensions, establishing the constraint envisaged for a stable maintenance of the working condition of the case 9 between the internal abutment wall 50 and the external abutment wall 51.

Since the switching of the condition of the case 9 from the working condition to the service condition requires a mutual distancing between the main element 9p and the complementary element 9s and since a traction force exerted along the longitudinal axis V is not capable of allowing the external abutment wall 51 to cross the activation wall 52, the embodiment referred to in figure 7 envisages an operating wall 54 adjacent to the external abutment wall 51. The operating wall 54 extends seamlessly with the external abutment wall 51 starting from the distal end of the external abutment wall 51. The operating wall 54 is preferably obtained integrally with the external abutment wall 51. Advantageously, the operating wall 54 surmounts the activation wall 52 in the working condition of the case 9. Although the operating wall 54 is depicted having a circular shape, the present invention is certainly not to be considered limited in such a sense, since alternative shapes can certainly be contemplated, as well as different shapes can be contemplated for the further components of the fixing system, including for example the activation wall 52.

In the working condition of the case 9, the operator can impart a pressure on the operating wall 54 directed towards the longitudinal axis V. Due to the consequent deformation of the operating wall 54, such a pressure is transferred to the activation wall 52. Deforming in turn, the activation wall 52 tends to approach the longitudinal axis V, mutually disengaging the internal abutment wall 50 and the external abutment wall 51. Having thus obtained the disengagement of the external abutment wall 51 from the internal abutment wall 50, the operator can finally separate the complementary element 9s from the main element 9p so as to establish the service condition of the case 9, in particular to withdraw the liquid from the collection volume 29 and/or to provide for a cleaning of the case 9.

In the configuration of the case 9 depicted in the figures, the locking means are ideally identical in number equal to two for each of the faces of the case, envisaging an ideal symmetry between the two pairs with respect to a plane passing through the longitudinal axis V. The distribution of the locking means referred to in the accompanying figures is optimal, as it allows to simultaneously obtain a stable and safe fixing of the complementary element 9s to the main element 9p in the working condition of the case 9 (the complementary element 9s being anchored at four distinct points of the main element 9p) and an easy and comfortable execution of the switching operation from the working condition to the service condition (the operator being able to separate the complementary element 9s from the main element 9p by grasping the main element 9p with one hand and the complementary element 9s with the other hand). Having observed this, however, it should be specified that the present invention should in no way be considered limited to the shape and/or distribution of the locking means object of representation, alternative conformations and/or distributions for the fixing means being clearly possible, which in any case form an interlocking of the complementary element 9s to the main element 9p in the working condition of the case 9.

Alternatively to the fixing means, articulation means can be used to determine the switching of the case 9 from the working condition to the service condition and from the service condition to the working condition. In such a case, the complementary element 9s is no longer a separable element of the case 9, but is an element constrained to the main element 9p, whereby there is a degree of freedom between the main element 9p and the complementary element 9s. In particular, such a degree of freedom is of a rotational type, so that the articulation means are in the form of a hinge and the case 9 further comprises coupling means, in particular of a releasable type, which inhibit the degree of freedom of the articulation means, so as to place the case 9 in the working condition.

### Advantages of the invention

From the above description, it is clear that the present invention achieves all the preset objectives.

Above all, the case 9 according to the present invention differs from the known technical solutions by the ability to allow the collection and disposal of the lubricating and/or protective oil released by the blade 8 during the storage steps and/or during the transport steps of the chainsaw 7, thus reducing the environmental impact of the chainsaw 7.

Furthermore, the case 9 according to the present invention differs from the known technical solutions by the ability to allow a correct, stable and safe application to the blade 8 during the storage steps and/or during the transport steps of the chainsaw 7, consequently increasing the convenience of use of the chainsaw 7. These advantages, together with others of equal relevance, are obtained by means of the case 9 implementing the features set forth in the following claims, as well as by variants of such a case 9 sharing the same inventive concepts thereof.

## Claims

1. Case (9) configured to be applied, in particular for the purposes of containment and/or protection, to a blade (8) of a tool, in particular of a cutting and/or pruning tool, more in particular of a chainsaw (7), when said blade (8) comprises a plurality of teeth to compose a cutting profile of said blade (8),
wherein said case (9) delimits a housing volume (28) of said blade (8) therein, said housing volume (28) departing from an insertion opening (11), in particular wherein said housing volume (28) extends along a longitudinal axis (V) in particular coinciding with the main extension direction of said blade (8) when said blade (8) is arranged in said housing volume (28),
**characterized in that** it is provided with locking means configured to establish, when said blade (8) is arranged in said housing volume (28), a position maintenance condition of said case (9) with respect to said blade (8), in said position maintenance condition a relative movement of said case (9) being substantially inhibited with respect to said blade (8), in particular a relative movement of said case (9) with respect to said blade (8) along said longitudinal axis (V),
wherein said locking means comprise at least one engagement element (4) configured to cooperate with at least one tooth (5) of said plurality of teeth so as to establish said position maintenance condition and
wherein at least one portion of said at least one engagement element (4) is adapted to act as an effective portion in said position maintenance condition, said effective portion (77) of said at least one engagement element (4) being arranged, in said position maintenance condition, inside an interposition zone between said at least one tooth (5) and said insertion opening (11).

2. Case (9) according to claim 1, wherein, in said position maintenance condition, said at least one portion of said at least one engagement element (4) operates in engagement and/or in abutment on a face of said at least one tooth (5) facing said insertion opening (11).

3. Case (9) according to claim 1 or claim 2, wherein said at least one engagement element (4) comprises an attachment portion (45), said attachment portion (45) allowing said effective portion (77) to be connected to an anchoring wall of said case (9), in particular said anchoring wall belonging to a wall of said case (9) substantially parallel to said longitudinal axis (V).
optionally wherein a connecting arm (85) extends between said attachment portion (45) and said effective portion (77), said connecting arm (85) extending along a direction orthogonal to said longitudinal axis (V) or mainly orthogonal to said longitudinal axis (V) and approaching said longitudinal axis (V), wherein said connecting arm (85) has a length comprised between 1 mm and 20 mm, in particular comprised between 2 mm and 10 mm, more in particular of about 5 mm.

4. Case (9) according to any one of the preceding claims, wherein said case (9) is further provided with unlocking means configured to temporarily disable said locking means and to establish a free removal condition of said case (9) with respect to said blade (8), in said free removal condition a relative movement of said case (9) with respect to said blade (8) being allowed, in particular a relative movement of said case (9) with respect to said blade (8) along said longitudinal axis (V), in particular so as to allow said blade (8) to be led outside said housing volume (28).
optionally wherein, when said blade (8) is arranged in said housing volume (28), said unlocking means are adapted to allow said effective portion (77) to be led outside said interposition zone between said at least one tooth (5) and said insertion opening (11).

5. Case (9) according to claim 4, wherein said unlocking means comprise an operating portion (43), said operating portion (43) being configured to allow a traction force to be exerted such as to generate a temporary switching of the condition of said case (9) from said position maintenance condition to said free removal condition,
optionally wherein said unlocking means comprise an operating portion (43), said operating portion (43) being configured to allow a traction force to be exerted such as to generate a temporary switching of the condition of said case (9) from said position maintenance condition to said free removal,
in particular wherein a pulling arm (95) extends between said operating portion (43) and said effective portion (77), said pulling arm (95) extending along a direction transverse to said longitudinal axis (V), in particular with an inclination comprised between 10° and 90°, more in particular with an inclination of about 60°, said pulling arm (95) extending towards said insertion opening (11) and away from said longitudinal axis (V), so as to make the distance between said operating portion (43) and said longitudinal axis (V) greater than the distance between said attachment portion (45) and said longitudinal axis (V),
preferably wherein a slot (38) is formed adjacent to said anchoring wall and wherein said slot (38) is crossed by said pulling arm (95) and/or
preferably wherein the distance between said operating portion (43) and said insertion opening (11) is comprised between 10 mm and 200 mm, in particular comprised between 50 mm and 150 mm, more in particular about 100 mm.

6. Case (9) according to claim 4 or claim 5, wherein said free removal condition is an unstable condition of said case (9) and requires a suitable external stress exerted at said unlocking means, said position maintenance condition of said case (9) automatically restoring itself upon the exhaustion of said suitable external stress,
optionally wherein said unlocking means are made in a single body with said locking means, in particular wherein said pulling arm (95) is made in a single body with said connecting arm (85).

7. Case (9) according to any one of the preceding claims, wherein said locking means are made in a single body with at least one wall of said case (9), in particular wherein said attachment portion (45) and optionally also said connecting arm (85) are made in a single body with said anchoring portion,
optionally wherein said locking means are made of plastic material, such as polyethylene.

8. Case (9) according to any one of claims 1 to 6, wherein said locking means are made in a separate body and thus fixed, in particular screwed or interlocked or welded, to at least one wall of said case (9), in particular wherein said attachment portion (45) and optionally also said connecting arm (85) are made in a separate body and thus fixed, in particular screwed or interlocked or welded, to said anchoring portion. optionally wherein said locking means are at least partially made of metallic material.

9. Case (9) according to any one of the preceding claims, wherein said case further delimits at least one liquid collection volume (29) therein, in particular lubricating and/or protective oil, possibly released by said blade (8), in particular during a storage or transport step of said tool, said at least one collection volume (29) being in communication with said housing volume (28), in particular wherein said case (9) comprises means for conveying said liquid from said housing volume (28) to said at least one collection volume (29).

10. Case (9) according to claim 9, wherein said at least one collection volume (29) is positioned at a first side (48) and wherein said locking means and optionally said unlocking means are positioned at a second side (49), said effective portion (77) being in particular positioned at said second side (49), said first side (48) and said second side (49) being opposite sides of said case (9) with respect to said longitudinal axis (V), in particular wherein, in at least one storage position of said tool, said first side (48) coincides with a lower side of said case (9) and said second side (49) coincides with an upper side of said case (9).

11. Case (9) according to claim 9 or claim 10, said case (9) comprising at least one main element (9p) and a complementary element (9s), said complementary element (9s) being a removable component of said case (9) selectively applicable to said main element (9p) so as to allow said case (9) to assume at least one working condition selectively separable from said main element (9p) so as to allow said case (9) to assume at least one service condition, said main element (9p) extending between a first end region (10) and a second end region (15) opposite said first end region (10), said insertion opening (11) being obtained in said first end region (10), wherein said complementary element (9s), in said working condition of said case (9), is applied to said main element (9p) at said second end region (15) and wherein said at least one collection volume (29), in said service condition of said case (9), is accessible, in particular so as to operate a disposal of liquid possibly contained in said at least one collection volume (29).
optionally wherein said at least one collection volume (29) is inside said complementary element (9s) and/or optionally wherein said locking means and optionally said unlocking means are associated with said main element (9p), said effective portion (77) being in particular associated with said main element (9p),
in particular wherein said locking means and optionally said unlocking means are made in a single body with said main element (9p) and said effective portion (77) is made in a single body with said main element (9p).

12. Assembly (1), comprising:
- a tool, in particular a cutting and/or pruning tool, more in particular a chainsaw (7), said tool comprising a blade (8), said blade (8) comprising a plurality of teeth composing a cutting profile of said blade (8), and
- a case (9) according to any one of the preceding claims,
wherein at least part of said blade (8) is arranged in the housing volume (28) of said case (9) and wherein said position maintenance condition of said case (9) is selectively established by said locking means, in said position maintenance condition of said case (9), said at least one engagement element (4) cooperating with at least one tooth (5) of said plurality of teeth and said at least one engagement element (4) being arranged inside an interposition zone between said at least one tooth (5) and said insertion opening (11).

13. Assembly (1) according to claim 12, wherein said locking means can be temporarily disabled by said unlocking means, so as to establish said free removal condition of said case (9).

14. Assembly (1) according to claim 12 or claim 13, wherein said blade (8) comprises a bar (21) and a chain (22), a groove being obtained along at least part of the perimeter of said bar (21) and said chain (22) being slidably housed in said groove, and wherein the teeth of said plurality of teeth belong to said chain (22),
optionally wherein said tool further comprises a motor unit and a gripping system, wherein said motor unit is configured to cause a sliding of said chain (22) along said groove during cutting and/or pruning operations executed by said tool and wherein said gripping system is configured to allow the gripping of said tool during cutting and/or pruning operations executed by means of said tool,
in particular wherein said motor unit comprises at least one endothermic motor fed with fuel or at least one electric motor with battery supply.

15. Assembly (1) according to any one of claims 12 to 14, said assembly (1) being configured to be able to be stored at least in a first storage position and in a second storage position, in said first storage position said longitudinal axis (V) being arranged along a substantially vertical direction and in said second storage position said longitudinal axis (V) being arranged along a substantially horizontal direction, wherein said at least one collection volume (29), both in said first storage position and in said second storage position, is at a lower height with respect to said locking means,
optionally wherein said case (9) is configured to obtain a conveyance of liquid from said housing volume (28) to said at least one collection volume (29) in conjunction with a switching in the storage position of said assembly (1) from said first storage position to said second storage position.
